Europäisches Patentamt

European Patent Office

Office européen des brevets

(19)

(11) Publication number: **0 206 346 B1**

## (12) EUROPEAN PATENT SPECIFICATION

(45) Date of publication of patent specification: **21.08.91**   (51) Int. Cl.⁵: **G06F 7/48**

(21) Application number: **86108757.5**

(22) Date of filing: **27.06.86**

(54) Operation code selected overflow interrupts.

(30) Priority: **28.06.85 US 750626**

(43) Date of publication of application:
**30.12.86 Bulletin  86/52**

(45) Publication of the grant of the patent:
**21.08.91 Bulletin  91/34**

(84) Designated Contracting States:
**CH DE FR GB IT LI NL SE**

(56) References cited:
**EP-A- 0 056 199**

**DEFENCE RESEARCH TELECOMMUNICA-
TIONS ESTABLISHMENT, report no. 1048, No-
vember 1960, pages 1-22, Ottawa, CA; C.D.
FLORIDA: "A parallel arithmetic unit for the
DRTE computer"**

(73) Proprietor: **Hewlett-Packard Company
P.O. Box 10301 3000 Hanover Street
Palo Alto California 94303-0890(US)**

(72) Inventor: **Worley Jr., William S.
19316 Falmouth Court
Saratoga, CA 95070(US)**

(74) Representative: **Liesegang, Roland, Dr.-Ing.
FORRESTER & BOEHMERT Widenmayer-
strasse 4 Postfach 22 01 37
W-8000 München 22(DE)**

## Description

The present invention concerns interrupt signals to interrupt execution of an instruction in a computing system when performing calculations on one or more operands, and refers in particular to an apparatus for performing operations on a first operand and on a second operand in response to a coded instruction, as set forth in the preamble of the claim. An apparatus of this kind is known from EP-A-0 056 199.

In general, a global instruction in the form of one field in the processor status word is provided to handle overflow control. Thereby, the time to execute operations which include an overflow is reduced, however, overall execution time including operations not including overflow is increased.

The term interruption as used in this specification is utilized to discuss the basic mechanism which handles traps, checks, faults and interrupts. Traps include two sorts of possibilities: either the functions or operations requested by a current instruction cannot or should not be carried out, or system intervention is desired by the user before or after the instruction is executed. Examples of the first possibility include arithmetic operations which result in overflow and instructions executed with insufficient privilege for their intended function.

Typically, when an arithmetic operation results in an overflow, the overflow is either ignored or is "trapped" out utilizing a data trap. When the overflow is ignored, meaningless data may result and be used in the execution of the remainder of the instruction. Typically, the processor status word contains a bit which directs overflow control. This results in a global instruction for overflow trapping, see above, which complicates the operation system design and user application programs. Further, selective trapping of a data overflow is not possible without changing the processor status word bit which provides overflow control.

It is the object of the present invention to provide an apparatus as set forth above in which selective trapping of data overflow from an arithmetic unit is possible without making use of a global overflow control mode.

This object is attained by the characterizing features of the claim.

The apparatus of the invention is less complicated and requires reduced overall time to execute operations. By the invention, selective data or overflow trapping is provided. The overflow control bit is eliminated from the processor status word, thereby eliminating a global overflow control mode. Overflow control for a particular arithmetic operation, according to an embodiment explained later, is determined by a seven-bit field within the operation instruction, thereby allowing an interrupt or trap operation to be executed only when it is desired or required. The invention is now explained with reference to the accompanying drawings.

Figure 1 illustrates a block diagram of the preferred embodiment in accordance with the principles of the present invention.

Figure 2 illustrates a block diagram representing a 32-bit instruction word.

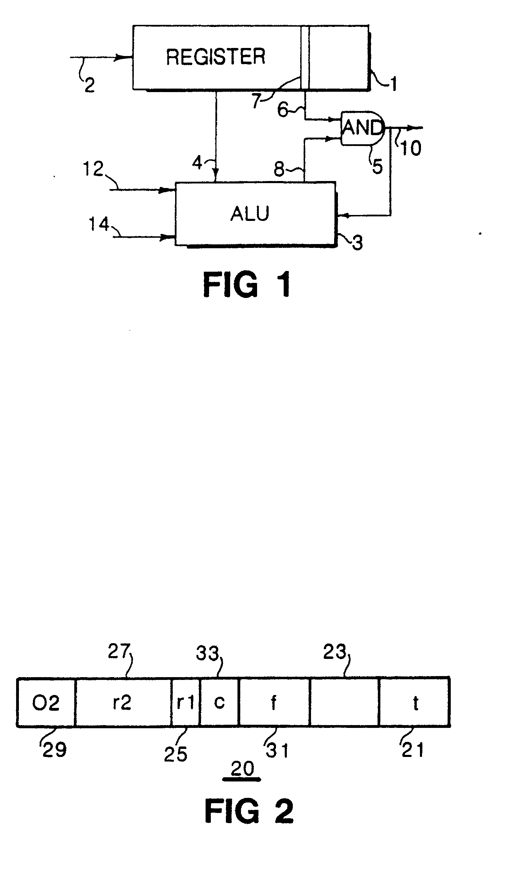

Referring to Figure 1, the preferred embodiment of the invention comprises an arithmetic logic unit (ALU) 3, an AND gate 5 and an instruction storage register 1. The ALU 3 receives a first operand and a second operand on lines 12 and 14, respectively, and, in response to a control signal on line 4, performs a desired operation. The control signal on line 4 is derived from an instruction or opcode word stored in register 1. The desired operation may be, for example, an addition or a shift and add (multiply) operation. If an overflow occurs as a result of the execution of the opcode stored in register 1, the ALU 3 will provide a logic signal on line 8 to AND gate 5. A logic signal on line 6 which determines whether or not to trap if an overflow occurs is input to the AND gate 5. If both of the signals input to the AND gate 5 are a logic 1, a logic 1 is output on line 10. In a preferred embodiment the logic signal on line 10 is coupled to the ALU 3. The logic signal on line 6 is derived from the bit or bits of the opcode word stored in cell 7 (field 23 as shown in Figure 2 )of the register 1. If the logic signal on line 10 is a logic 1 indicating that an overflow condition exists and that an instruction to trap is present, ALU 3 traps the overflow thereby preventing meaningless data from being couled from the ALU 3 to the remainder of the system (not shown).

Referring now to Figure 2, the format of a major opcode instruction word is illustrated. Field 29 is six bits long and is the major opcode field determining the class of operation to be done by the machine. For example, the "02" entered in major opcode field 29 defines a three-register arithmetic and logical instruction; i.e., one major opcode defines arithmetic and logic operations between two operands stored in two general registers (not shown) and (conditionally) puts the result, zero, one, the generated condition or the first operand into a third general register (not shown). Fields 27, 25 and 21 contain the addresses of the general registers holding the operands and the general register where the resultant is stored. Fields 31 and 33 determine the conditions that the resultant is to be tested for and may be any of eight arithmetic conditions or their negations. The opcode extension field 23 is seven bits long and defines the arithmetic or logic operations to be performed; add, subtract or shift, for example. The opcode extension field 23 also contains the bit or bits which determine whether or not to trap if an overflow occurs.

## Claims

1. Apparatus for performing operations on a first operand and a second operand in response to a coded instruction, comprising calculating means (3) for receiving the first operand (by 12) and the second operand (by 14) and being responsive to a control signal (on 4) for producing a resultant and for producing an overflow signal (on 8) indicative of the occurrence of an overflow event; register means (1) coupled to the calculating means (3) for storing the coded instruction and providing said control signal (on 4) to the calculating means (3), said control signal (on 4) being derived from said, coded instruction, and for providing a logic signal (on 6) derived from the coded instruction, said logic signal having a first value if an interrupt function is defined and having a second value if an interrupt function is not defined; and gating means (5) coupled to said register means (1) and to said calculating means (3) for providing an interrupt signal (on 10) when said logic signal is of said first value and said overflow signal indicates that an overflow event has occurred, **characterized by** the output (10) of said gating means (5) being coupled to said calculating means (3) so as to provide the latter with said interrupt signal to cause an interrupt of the operation defined by said coded instruction (on 4).

## Revendications

1. Appareil pour effectuer des opérations sur un premier opérande et un second opérande en réponse à une instruction codée, comprenant un moyen calculateur (3) pour recevoir le premier opérande (en 12) et le second opérande (en 14) et répondant à un signal de commande (en 4) pour produire un résultat et pour engendrer un signal de dépassement (en 8) indiquant l'apparition d'un événement de dépassement; un moyen à registre (1) relié au moyen calculateur (3) pour mémoriser l'instruction codée et appliquer ledit signal de commande (en 4) au moyen calculateur (3), ledit signal de commande (en 4) étant dérivé de ladite instruction codée, et pour produire un signal logique (en 6) dérivé de l'instruction codée, ledit signal logique ayant une première valeur si une fonction d'interruption est définie et ayant une seconde valeur si une fonction d'interruption n'est pas définie; ainsi qu'un moyen de déclenchement (5) relié audit moyen à registre (1) et audit moyen calculateur (3) pour produire un signal d'interruption (en 10) quand ledit signal logique a ladite première valeur et ledit signal de dépassement indique qu'un événement de dépassement s'est produit, caractérisé en ce que la sortie (10) dudit moyen de déclenchement (5) est reliéeaudit moyen calculateur (3) pour appliquer à ce dernier ledit signal d'interruption afin de produire une interruption de l'opération définie par ladite instruction codée (en 4).

## Patentansprüche

1. Vorrichtung zum Durchführen von Operationen an einem ersten Operanden und einem zweiten Operanden in Antwort auf eine verschlüsselte Instruktion mit einer Rechenvorrichtung (3) zum Empfangen des ersten Operanden (über 12) und des zweiten Operanden (über 14), wobei die Rechenvorrichtung auf ein Steuersignal (von 4) zum Erzeugen einer Resultierenden und eines Überlaufsignals (bei 8) reagiert, welches das Auftreten eines Überlaufereignisses signalisiert; einer Registervorrichtung (1) die mit der Rechenvorrichtung (3) zum Speichern der verschlüsselten Instruktion gekoppelt ist und das Steuersignal (bei 4) an die Rechenvorrichtung (3) ausgibt, wobei das Steuersignal (bei 4) von der verschlüsselten Instruktion abgeleitet ist, und zum Erzeugen eines logischen Signals (bei 6), das von der verschlüsselten Instruktion abgeleitet ist und einen ersten Wert annimmt, wenn eine Unterbrecherfunktion definiert ist, und einen zweiten Wert annimmt, wenn eine Unterbrecherfunktion nicht definiert ist; und mit einer Torvorrichtung (5), die mit der Registervorrichtung (1) und der Rechenvorrichtung (3) gekoppelt ist, um ein Unterbrechersignal (bei 10) auszugeben, wenn das logische Signal den ersten Wert annimmt und das Überlaufsignal anzeigt, daß ein Überlaufereignis eingetreten ist, **dadurch gekennzeichnet,** daß der Ausgang (10) der Torvorrichtung (5) mit der Rechenvorrichtung (3) verbunden ist, um die letztere mit dem Unterbrechersignal zu versorgen und eine Unterbrechung der durch die verschlüsselte Instruktion (bei 4) definierten Operation herbeizuführen.

**FIG 1**

**FIG 2**